# FASCICULE DE BREVET EUROPEEN

(11) **EP 0 968 646 B1**
(45) Date de publication et mention de la délivrance du brevet: **11.05.2005**
(21) Numéro de dépôt: 99440180.0
(22) Date de dépôt: 02.07.1999
(51) Int. Cl.: A01K 11/00

(54) **Pendentif ou boucle d'oreille inviolable pour le marquage des animaux**
Fälschungssicherer Anhänger oder Ohrmarke zur Tiermarkierung
Tamperproof pendant or ear tag for marking animals

(30) Priorité: 03.07.1998 FR 9808647
(43) Date de publication de la demande: 05.01.2000
(73) Titulaire: Vétérinaire - Alsace (Société Anonyme), 67440 Marmoutier (FR)
(72) Inventeur: Welsch, Jean-Marie, 67590 Wintershouse (FR)
(74) Mandataire: Nuss, Pierre

(56) Documents cités:
- EP-A- 0 890 305
- FR-A- 2 569 944
- US-A- 4 953 313

## Description

La présente invention concerne le marquage des animaux, notamment pour l'identification bovine, ovine et caprine, et a pour objet un pendentif ou boucle d'oreille inviolable pour le marquage des animaux.

Les pendentifs d'oreille généralement utilisés pour l'identification des animaux, et en particulier du bétail, se composent d'une plaquette femelle en matière plastique souple comportant un trou épaulé surmonté généralement d'un capuchon d'obturation, et d'une plaquette mâle également en plastique souple comportant une tige creuse cylindrique surmontée d'une tête conique pointue. Cet tête conique perce l'oreille et vient se loger derrière le trou épaulé et, le cas échéant, dans le capuchon de la plaquette femelle au moment de l'encliquetage des deux plaquettes.

La pose de ces pendentifs à oreille s'effectue en général avec des pinces équipées d'une broche ou d'un pointeau sur une mâchoire et d'un logement pour l'épaulement ou le capuchon du pendentif femelle sur l'autre mâchoire.

La mâchoire équipée de la broche et chargée avec une plaquette mâle perce, dans un premier temps, le cartilage de l'oreille et, dans un deuxième temps, vient se loger dans le capuchon de la partie femelle.

De tel(lles) pendentifs ou boucles sont par exemple connu(e)s par les documents WO 95/25426, WO 95/25427, FR-A 2 578 713, FR-A 2 302 032 et FR-A 2 569 944.

Ce dernier document, qui présente un pendentif renforcé contre les fraudes, décrit un pendentif dans lequel une bague ou un anneau fendu(e) rigide, pourvu(e) d'un rebord intérieur inférieur pour la rétention de la pointe de l'élément mâle, est montée dans le capuchon ou bossage de l'élément femelle qui reçoit ladite pointe après mise en place dudit pendentif.

Toutefois, même les modèles de pendentifs ou de boucles d'oreille les plus perfectionnés disponibles actuellement, c'est-à-dire notamment ceux avec un anneau rigide à l'intérieur du capuchon femelle, peuvent être fraudées en faisant des incisions transversales dans le capuchon d'inviolabilité ou en repoussant le tout avec une pince. Dans ces cas, les trois pièces constituant la boucle peuvent être réutilisées facilement.

Cette dernière manipulation est encore nettement plus facile à effectuer avec des pendentifs mono-matière ne possédant ni anneau de sécurité, ni pointe rigide sur la tige mâle. Ces modèles de pendentifs sont d'ailleurs quasiment impossible à poser sur les animaux adultes dont le cartillage des oreilles est souvent trop dur pour être percé par ces pendentifs. De plus, lorsque les éléments mâle et femelle des pendentifs mono-matière sont encliquetés, il n'est souvent plus possible de faire tourner l'un des éléments par rapport à l'autre du fait des frottements importants existant entre eux.

Sur les pendentifs à anneau précités, l'anneau de sécurité n'est pas visible sur l'animal car il est prisonnier à l'intérieur du capuchon. Ainsi, lors des inspections de troupeaux, lors des transits d'animaux et dans les abattoirs, il est impossible de détecter les boucles fraudées sans les découpler. En outre, il y a également un risque que les fabricants de tels pendentifs omettent d'insérer l'anneau de sécurité au moment de la fabrication et l'absence de cet anneau ne pourra pas non plus être constaté par l'éleveur ou l'agent identificateur au moment de la pose pour les raisons mentionnées ci-dessus.

D'autre part, les boucles ou pendentifs actuellement utilisé(e)s, y compris celles ou ceux avec des anneaux rigides ouverts à l'intérieur du capuchon, peuvent s'écraser au moment du sertissage en raison de la flexibilité du plastique formant la paroi et de la forme arrondie de l'anneau. Ce phénomène est très néfaste car dans ces cas, la pointe mâle n'est pas toujours encliquetée dans l'anneau de sécurité et elle se retrouve positionnée entre l'anneau et la paroi souple percée formant le fond du capuchon. Ceci est pénalisant pour la tenue des boucles et facilite le désencliquetage volontaire, donc les fraudes, d'autant plus que de grandes quantités peuvent être posées dans ces conditions, sans que l'agent identificateur ne puisse s'en rendre compte.

En outre, lors de la fabrication des parties femelles des pendentifs ou boucles connu(e)s, plus particulièrement la réalisation des capuchons, par injection de matière thermoplastique, le retrait de la portion d'outil de l'intérieur de ce dernier déforme la paroi percée formant le fond du capuchon, distend l'orifice de passage et arrondit l'épaulement de rétention (en fait son arête), qui de ce fait n'assurera plus une fermeture étanche autour de l'élément mâle après montage et ne pourra plus remplir de façon optimale, voire de manière satisfaisante, la fonction de rétention de la pointe de l'élément mâle ou de la bague fendue.

Par ailleurs, vu la conception des pointes mâles des meilleurs boucles actuellement disponibles, notamment celles divulguées dans les documents précités, les parties mâles peuvent être récupérées intactes après désencliquetage volontaire ou involontaire, ce qui ne permet pas l'application fiable de règles de traçabilité.

La plupart des pendentifs actuellement sur le marché présentent également des risques d'éjection de la pointe rigide, notamment rapportée, au moment du perçage de l'oreille et de l'encliquetage dans la partie femelle. La pose n'est alors pas garantie, elle nécessite plus de force et le mauvais encliquetage n'est pas forcément constaté par l'opérateur.

Enfin, la fabrication de ces différents pendentifs connus munis de capuchons, et le cas échéant d'anneaux insérés, est relativement complexe et délicate et entraîne un prix de revient élevé.

Le document EP-A-0 890 305, faisant partie de l'état de la technique au sens des articles 54(1) et (3) CBE, concerne un pendentif ou une boucle d'oreille pour le marquage des animaux, selon le préambule de la revendication 1.

Toutefois, le pendentif évoqué dans ce document présente une constitution complexe (notamment pour la partie femelle) entraînant une fabrication compliquée, une structure au moins semi-rigide et le seuil de rupture en cas de tentative de séparation des éléments mâle et femelle n'est pas déterminable de manière précise.

La présente invention a notamment pour but de pallier au moins certains des inconvénients précités, en procurant un pendentif ou une boucle d'oreille très difficile à forcer, ne pouvant en tout cas pas être forcé(e) sans endommager irrémédiablement les constituants, en rendant leur réutilisation valable impossible.

De plus, le pendentif ou la boucle à fournir devra présenter une structure majoritairement souple, présenter un seuil de rupture prédéterminé, pouvoir être fabriqué(e) de manière relativement simple et avoir des éléments constitutifs pouvant tourner librement après encliquetage.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale d'une plaquette associée à un élément d'assemblage mâle, faisant partie du pendentif selon l'invention ;
la figure 2 est une vue en élévation latérale d'une plaquette associée à un élément d'assemblage femelle, faisant également partie du pendentif selon l'invention ;
la figure 3 est une vue de détail en coupe et en élévation latérale de la pointe de l'élément mâle ;
la figure 4 est une vue de dessus de la pointe représentée sur la figure 3 ;
la figure 5 est une vue de détail en coupe et en élévation latérale selon A-A de l'élément d'assemblage femelle représenté sur la figure 2 ;
la figure 6 est une vue de détail en élévation latérale et en coupe d'éléments d'assemblage mâle et femelle à l'état assemblé, et,
la figure 7 est une représentation schématique des différentes étapes de fabrication d'un capuchon ou d'une capsule selon l'invention.

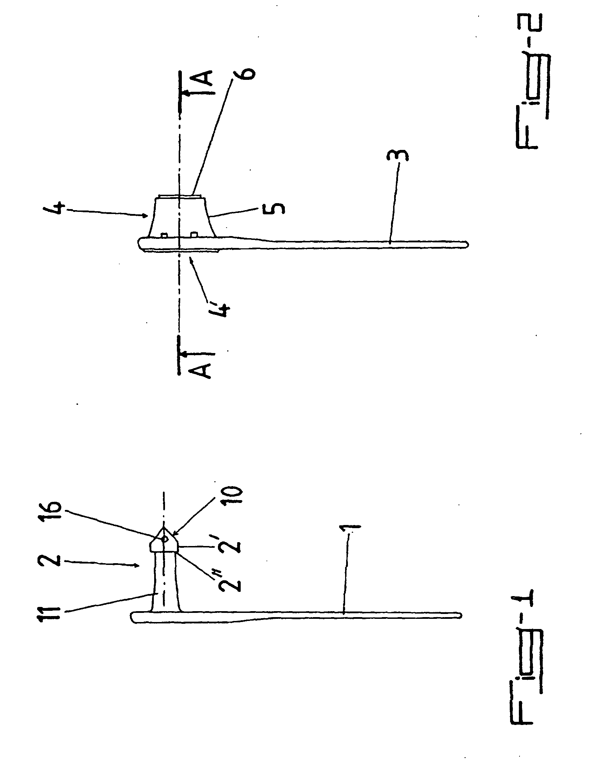

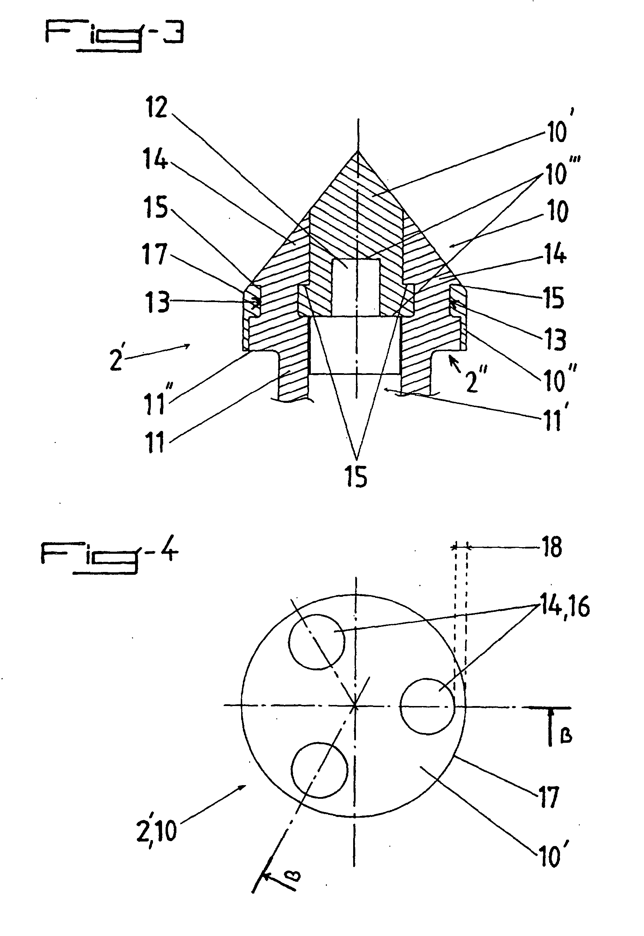

Comme le montrent les figures 1, 2 et 6, le pendentif ou la boucle d'oreille pour le marquage des animaux, est constitué(e) par une première plaquette 1 associée à un élément d'assemblage mâle 2 comportant une extrémité en forme de pointe 2' et par une seconde plaquette 3 associée à un élément d'assemblage femelle 4 pouvant recevoir ladite pointe 2'.

Les deux plaquettes 1 et 3 peuvent consister en deux éléments indépendants ou éventuellement être réalisées d'un seul tenant pour former un pendentif ou boucle d'une seule pièce.

L'élément femelle 4 comprend d'une part, un orifice 4' pour le passage de la pointe 2' prolongé, du côté opposé au côté d'introduction de la pointe 2', d'un manchon ou d'une portion de manchon 5 en un matériau thermoplastique et, d'autre part, un capuchon ou une capsule 6 rapporté(e) de manière ajustée dans ledit manchon ou ladite portion de manchon 5 fermé(e) ou non à son extrémité opposée à l'orifice 4' et comportant des moyens d'ancrage 7 dans les parois de ce(tte) dernier(e) et/ou dans la seconde plaquette 3 et des moyens de rétention 8 de la pointe 2' de l'élément mâle 2, notamment au niveau d'un épaulement arrière 2" de ladite pointe 2'.

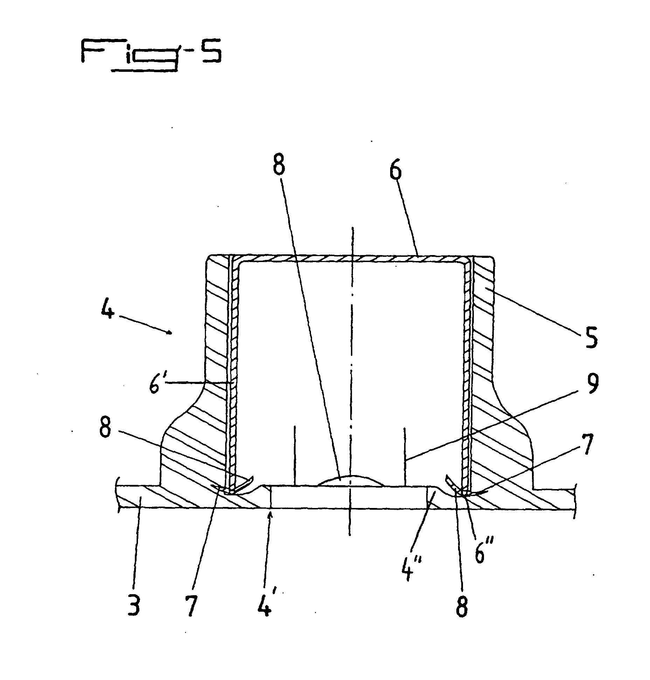

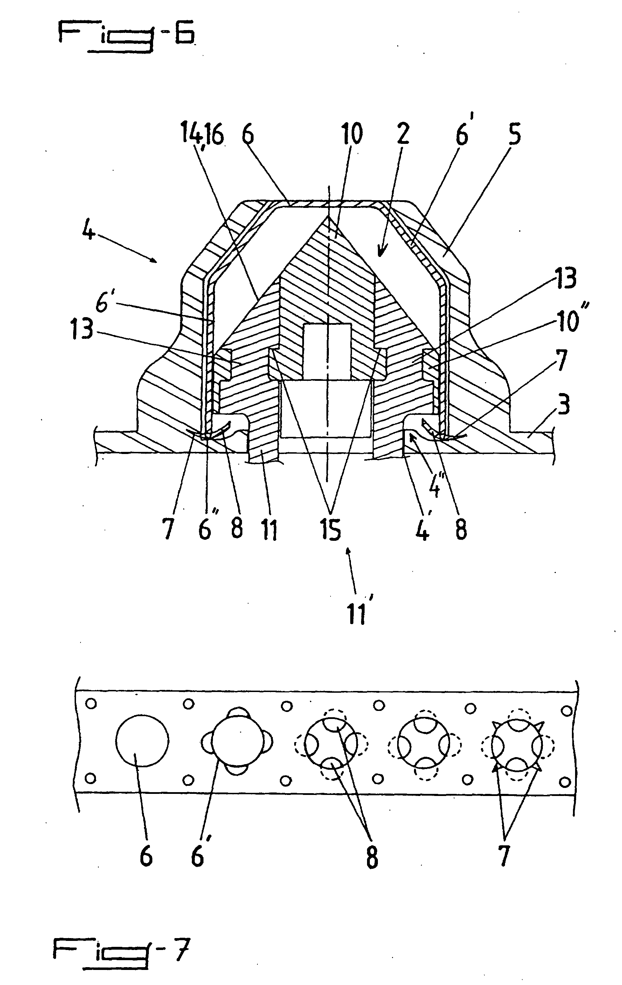

Selon une première caractéristique de l'invention, représentée aux figures 5 et 6 des dessins annexés, le capuchon 6 comprend une paroi périphérique 6' dont la hauteur est sensiblement égale à celle du manchon ou de la portion de manchon 5 et présente une forme similaire à un dé à coudre cylindrique ou tronconique, le cas échéant avec une partie supérieure épousant sensiblement la forme de la pointe 2' les moyens d'ancrage 7 et les moyens de rétention 8 consistant, respectivement, d'une part, en des prolongements inférieurs de la paroi 6' en forme d'ergots s'étendant vers l'extérieur et, d'autre part, en des prolongements inférieurs de la paroi 6' en forme de languettes s'étendant vers l'intérieur.

Le capuchon 6 présentant une hauteur sensiblement égale à celle du manchon 5, celui-ci sera au moins de niveau avec le bord supérieur dudit manchon et permettra d'éviter toute déformation de l'élément d'assemblage femelle 4 due à un éventuel écrasement de matière au moment de la pose. Ainsi, le mouvement de rapprochement des mâchoires de la pince sera intégralement transmis auxdits éléments d'assemblage 2 et 4 et assurera ainsi une introduction garantie de la pointe 2' dans le capuchon 6.

Comme le montre la figure 7 des dessins annexés, les ergots 7 présentent avantageusement une forme pointue, éventuellement dentée ou pourvue de barbes, alors que les languettes 8 ou portions de languettes présentent une forme arrondie ou rectangulaire, le nombre desdits ergots 6 et languettes 8 étant compris entre deux et dix, préférentiellement d'environ quatre.

Les ergots 7 pourront constituer un point de rupture (le cas échéant calibré en terme de force d'ancrage par le nombre et/ou la forme desdits ergots) permettant d'éviter le repoussement de la capsule 6 en dehors du manchon 5 ou entraînant, pour le cas où un tel repoussement serait opéré à force, un endommagement visible et irrémédiable de l'élément femelle 4 ou au moins du manchon 5.

De plus, les ergots 7 et languettes 8 sont avantageusement répartis uniformément autour du bord inférieur 6" de la paroi périphérique 6' en étant mutuellement alternés et sont au moins légèrement inclinés, au delà du plan contenant le bord inférieur de la paroi 6', en direction de la partie supérieure fermée dudit capuchon 6.

L'orifice 4' et la portion de paroi qui le délimite présentent des dimensions et des caractéristiques de déformation telles qu'elles autorisent un passage en force de la pointe 2' et assurent une bonne étanchéité autour de l'élément mâle 2, après le passage de ladite pointe 2', en arrière de l'épaulement 2".

Ainsi, la pointe 2' sera retenue dans le capuchon 6 à la fois par un pallier relativement souple constitué par les bords de l'orifice de passage 4' et par un pallier sensiblement plus rigide formé par les différentes languettes 8. Cette structure, associée à la constitution des languettes 8, autorisera une introduction relativement aisée de la pointe 2' dans le capuchon 6 (étirement élastique de l'orifice 4' et pliage résilient des languettes 8), ainsi qu'un maintien renforcé de ladite pointe 2' dans ledit capuchon 6 après son introduction complète dans ce dernier.

Le diamètre intérieur du capuchon ou capsule 6 est néanmois légèrement plus grand que le diamètre extérieur de l'embase de la pointe rigide 2', afin de permettre la rotation de la plaquette mâle après sertissage.

Le manchon ou la portion de manchon 5 pourra être avantageusement réalisé(e) d'un seul tenant avec la seconde plaquette 3, en un matériau thermoplastique au moins légèrement flexible, ou éventuellement être rapporté(e) par soudage ou analogue et présenté au niveau de sa base une épaisseur de paroi plus importante, notamment dans la zone d'ancrage des ergots 7.

Ce manchon ou cette portion de manchon 5 sera avantageusement réalisée de manière ouverte, permettant ainsi lors de sa fabrication un démoulage sans passage en force de l'outil au niveau de l'orifice 4' et donc sans déformation de ce dernier.

Toutefois, l'élément d'assemblage femelle 3 pourra également être pourvu d'un manchon ou d'une portion de manchon 5 fermé(e) ou partiellement fermé(e) (par exemple muni d'un petit trou permettant de vérifier la présence de la capsule 6), le démoulage s'effectuant alors à travers l'orifice 4' ou à travers le trou présent.

Conformément à une autre caractéristique de l'invention, représentée partiellement sur les figures 5 et 6 des dessins annexés, le capuchon 6 est réalisé en un matériau au moins légèrement élastiquement déformable, préférentiellement métallique, et/ou muni au niveau du bord inférieur 6" de la paroi périphérique 6' de portions de fentes longitudinales 9 espacées circonférentiellement, de manière à permettre une compression élastique de la partie inférieure ouverte dudit capuchon 6.

Il est ainsi possible, lors de l'implantation du capuchon 6, de comprimer la base de ce dernier avec un outil adapté lors de son introduction dans le manchon 5 et, ensuite, en supprimant ladite compression, lorsque l'introduction est complète, d'autoriser son expansion et l'enfoncement des ergots 7 dans la paroi dudit manchon 5.

Ainsi, lors de la fabrication de l'élément d'assemblage femelle 4, le capuchon 6 est inséré de force dans le manchon 5 en matériau thermoplastique, immédiatement après formation de ce dernier, le cas échéant d'un seul tenant avec la plaquette 3 correspondante, ou après solidarisation de ce dernier avec ladite plaquette 3, préférentiellement alors que ledit matériau constitutif est encore dans un état au moins légèrement plastique.

Il convient de noter qu'un tel mode de réalisation de l'élément d'assemblage femelle 4, facilite notablement la fabrication par moulage de l'ensemble plaquette 3 / manchon 5 lorsque ce dernier présente une structure "ouverte", permettant notamment d'éviter le retrait d'une portion d'outil de moulage à travers l'orifice 4' et donc la déformation vers l'extérieur de ce dernier dès la fabrication.

En outre, la mise en place du capuchon ou de la capsule 6 immédiatement après fabrication de l'ensemble plaquette 3 / manchon 5 permet d'obtenir une liaison intime entre ledit capuchon 6 et ledit ensemble, aussi bien au niveau des ergots 7 qu'éventuellement entre les parois du manchon 5 et du capuchon 6.

Ce dernier est préférentiellement réalisé en un matériau dur et résistant, tel qu'un métal (avantageusement de l'acier), et obtenu par formage dans une bande de matériau adapté, puis découpage ensemble avec les ergots 7 et les languettes 8 et, enfin, traitement (notamment anticorrosion et/ou cémentation ou trempage) et revêtement extérieur.

Ce capuchon ou cette capsule 6 est recouverte, notamment au niveau de sa partie visible, non entourée par le manchon 5, d'un revêtement, par exemple peinture, laque ou analogue, dont la couleur se différencie nettement de celle du manchon 5 et de la plaquette 3, de manière à permettre la détection de sa présence ou de son absence à distance.

Selon une variante de réalisation de l'invention, le capuchon 6 peut porter ou être relié à un dispositif électronique de marquage et/ou de signalisation, par exemple sous la forme d'un circuit intégré monolithique, pour former un ensemble émetteur dont le capuchon 6 constitue le support et/ou l'antenne et pouvant être détecté et interrogé par un système récepteur correspondant.

Selon l'invention et comme le montrent les figures 1, 3, 4 et 7 des dessins annexées, l'élément mâle 2 présente une structure composite à savoir un corps de pointe 10 formant un cône pointu 10' prolongé par une partie arrière cylindrique 10" et une tige creuse 11 ancrée dans ledit corps de pointe 10 par son extrémité distale et dont le passage creux longitudinal 11' débouche sur le côté arrière 10"' de la pointe du cône 10' à l'intérieur du corps de pointe 10, ledit côté arrière ayant une conformation complémentaire de celle de l'extrémité du pointeau 12 de la pince à sertir ou de l'outil servant à appliquer ledit pendentif.

Comme représenté plus particulièrement sur les figures 3 et 7 des dessins annexés, la partie arrière cylindrique 10" présente une structure essentiellement creuse et reçoit l'extrémité distale 11" de la tige creuse 11 en forme de collerette, de manière à former un épaulement annulaire circonférentiel 2" sur la face arrière de la pointe 2' de l'élément mâle 2 dont une partie circonférentielle intérieure est formée par ladite collerette 11" et la partie circonférentielle complémentaire extérieure par le bord libre de ladite partie arrière cylindrique creuse 10".

De manière avantageuse, les languettes de rétention 8 présentent une longueur telle qu'elles viennent en prise au niveau du bord libre inférieur de la paroi formant la partie arrière cylindrique creuse 10" du corps de pointe 10 et partiellement au niveau de la colerette formant l'extrémité distale 11" de la tige creuse 11.

En outre, l'orifice 4' pourra être délimité par un épaulement 4" en un matériau souple, sur lequel reposera la majeure partie de la colerette 11".

Ainsi, la rétention de la pointe 2' au niveau de l'élément d'assemblage femelle 3 après encliquetage ou sertissage, sera réalisée, d'une part, par un support mou (collerette 11" / épaulement 4") qui absorbera notamment les sollicitations usuelles ainsi que les flexions habituelles entre les éléments du pendentif et, d'autre part, par un support rigide (bord libre de la partie arrière cylindrique creuse 10" / languette de rétention 8) fournissant une force de rétention supérieure à la résistance des zones de rupture ou de désengagement calibré(e) 13, sans nécessiter de pincement entre les éléments mâle et femelle qui peuvent librement tourner l'un par rapport à l'autre.

Par ailleurs, la réalisation de la partie arrière cylindrique creuse 10" sous forme de paroi mince entourant une collerette en un matériau thermoplastique mou, autorisera une compression de ladite partie 10" lors de l'introduction de la pointe 2' dans l'élément femelle 3, limitant ainsi les déformations au niveau de l'orifice 4' lors de l'introduction de ladite pointe 2'.

Afin d'assurer la destruction irrémédiable de l'élément d'assemblage mâle 2 lors d'une tentative de désengagement de force, la liaison assurant l'ancrage de la tige creuse 11 dans le corps de pointe 10 comporte une ou des zone(s) de rupture ou de désengagement calibré(e) 13. protégée(s) par ledit corps de pointe 10, entraînant une désolidarisation de la tige creuse 11 d'avec le corps de pointe 10 lorsqu'ils sont soumis à une force de séparation dépassant une valeur seuil prédéterminée.

Les zones de rupture et de désengagement 13 étant situées à l'intérieur du corps de pointe 10, elles ne sont pas soumises aux influences des flexions ordinaires subies par le pendentif après son montage sur l'oreille de l'animal, ni aux autres agressions extérieures, et peuvent par conséquent conserver une charge de rupture constante dans le temps.

Selon une variante de réalisation préférée de l'invention, représentée notamment à la figure 3 des dessins annexés (qui est une vue en coupe selon B-B de la figure 4), la liaison assurant l'ancrage de la tige creuse 11 dans le corps de pointe 10 est réalisée par des prolongements 14 de l'extrémité distale 11" de la tige creuse 11 prenant appui au niveau d'épaulements adaptés 15 ménagés dans le corps de pointe 10, lesdits prolongements 14 débouchant de manière affleurante au niveau de la surface extérieure du cône pointu 10', en formant des motifs 16 ne présentant sensiblement aucune portion de contour parallèle avec l'arrête circonférentielle 17 séparant le cône pointu 10' et la partie arrière cylindrique 10" du corps de pointe 10 et situés à distance de la pointe dudit cône 10' et en dehors d'une zone annulaire circonférentielle 18 s'étendant à la base dudit cône pointu 10'.

Le corps de pointe 10 est réalisé en un matériau plastique dur et rigide ou en métal (préférentiellement inoxydable) et la tige creuse 11 en un matériau plastique au moins partiellement déformable élastiquement et flexible, préférentiellement souple, le corps de pointe 10 et la tige creuse 11, ainsi qu'éventuellement la seconde plaquette 3, étant réalisées d'un seul tenant par injection simultanée de deux matériaux thermoplastiques différents, par surmoulage ou par assemblage d'un corps de pointe 10 métallique avec une tige 11 et une plaquette 3 en matériau thermoplastique.

Comme le montre avantageusement les figures 3, 4 et 6 des dessins annexés, les motifs 16 apparents des prolongements 14 ne descendent pas jusqu'au niveau de l'arête circonférentielle 17, évitant ainsi un phénomène de compression au niveau de ladite arête 17 très défavorable lors du passage de cette arête au niveau de l'orifice 4'.

En effet, il est nettement préférable de disposer d'une surface fermée en matériaux rigides au niveau de ladite arête 17 et sur toute la circonférence de la pointe 10, ce qui facilite grandement le passage de ladite arête au niveau de l'orifice 4'. De plus, une telle conformation évite tout déchirement et toute coupure du cartillage de l'oreille lors du passage de la pointe 10, le trou formé par perçage avec la pointe 10 devant s'écarter puis se refermer en évitant la coupure des nerfs et des vaisseaux sanguins.

Selon une variante de réalisation de l'invention, ladite pointe 2' pourra reposée, après son introduction dans le capuchon 6, sur les extrémités des languettes 8 au niveau de la collerette 11", qui réaliseront des incisions dans ladite collerette en cas de tentative de désengagement de la pointe 2' et contribueront ainsi à la destruction de l'élément d'assemblage mâle 2.

Ainsi, grâce à l'invention, il est possible de réaliser un pendentif ou boucle d'oreille inviolable c'est-à-dire ne pouvant être forcé après assemblage sans entraîner des dommages visibles et irréparables, ce quel que soit le type d'attaque concerné (tentative d'extraction de la pointe 2' du capuchon 6 par traction, tentative de découpe du manchon 5 et/ou du capuchon 6, tentative d'extraction de la pointe 2' du capuchon 6 par compression ou écrasement de l'élément d'assemblage femelle 4 ou analogue). La pointe 2' se retrouve en effet, après introduction dans le capuchon 6 (en un matériau dur, par exemple métallique), totalement et irrémédiablement emprisonnée ou encapsulée dans ce dernier et ne pourra en être dégagée sans dommages.

En outre, en réalisant avantageusement le pendentif ou boucle d'oreille en un matériau souple à l'exception des seules parties servant activement au perçage du cartillage et à l'encliquetage mâle / femelle, il est possible de fournir un pendentif ou une boucle se déformant aisément dans le cadre des sollicitations usuelles et conservant ses caractéristiques dans le temps (notamment charge de rupture).

Par ailleurs, les zones de ruptures étant protégées par un matériau rigide (corps de pointe 10'), elles ne sont pas directement soumises aux actions extérieures agissant sur la boucle ou le pendentif, et ne sont donc notamment pas sollicitées au cours des flexions habituelles que subit ladite boucle ou ledit pendentif.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, comme défini par les revendications suivantes.

## Revendications

1. Pendentif ou boucle d'oreille pour le marquage des animaux, constitué(e) par une première plaquette associée à un élément d'assemblage mâle comportant une extrémité en forme de pointe et par une seconde plaquette associée à un élément d'assemblage femelle pouvant recevoir ladite pointe, l'élément femelle (4) comprenant, d'une part, un orifice (4') pour le passage de la pointe (2') prolongé, du côté opposé au côté d'introduction de la pointe (2'), d'un manchon ou d'une portion de manchon (5) en un matériau thermoplastique, fermé(e) ou non à son extrémité opposée à l'orifice (4'), et, d'autre part, un capuchon ou une capsule (6) rapporté(e) de manière ajustée dans ledit manchon ou ladite portion de manchon (5) et comportant des moyens d'ancrage (7) dans les parois de ce(tte) dernier(e) et/ou dans la seconde plaquette (3) et des moyens de rétention (8) de la pointe (2') de l'élément mâle (2), notamment au niveau d'un épaulement arrière (2") de ladite pointe (2'), pendentif **caractérisé en ce que** l'élément mâle (2) présente une structure composite à savoir un corps de pointe (10) formant un cône pointu (10') prolongé par une partie arrière cylindrique (10") et une tige creuse (11) ancrée dans ledit corps de pointe (10) par son extrémité distale et dont le passage creux longitudinal (11') débouche sur le côté arrière (10''') de la pointe du cône (10') à l'intérieur du corps de pointe (10), **en ce que** le corps de pointe (10) est réalisé en un matériau plastique dur et rigide ou en métal et la tige creuse (11) en un matériau plastique au moins partiellement déformable élastiquement et flexible, préférentiellement souple, et **en ce que** la liaison assurant l'ancrage de la tige creuse (11) dans le corps de pointe (10) comporte une ou des zone(s) de rupture ou de désengagement calibré(e) (13) protégée(s) par ledit corps de pointe (10), entraînant une désolidarisation de la tige creuse (11) d'avec le corps de pointe (10) lorsqu'ils sont soumis à une force de séparation dépassant une valeur seuil prédéterminée.

2. Pendentif d'oreille selon la revendication 1, **caractérisé en ce que** le capuchon (6) comprend une paroi périphérique (6') dont la hauteur est sensiblement égale à celle du manchon ou de la portion de manchon (5) et présente une forme similaire à un dé à coudre cylindrique ou tronconique, le cas échéant avec une partie supérieure épousant sensiblement la forme de la pointe (2'), les moyens d'ancrage (7) et les moyens de rétention (8) consistant, respectivement, d'une part, en des prolongements inférieurs de la paroi (6') en forme d'ergots s'étendant vers l'extérieur et, d'autre part, en des prolongements inférieurs de la paroi (6') en forme de languettes s'étendant vers l'intérieur.

3. Pendentif d'oreille selon la revendication 2, **caractérisé en ce que** les ergots (7) et les languettes (8) sont répartis uniformément autour du bord inférieur (6") de la paroi périphérique (6') en étant mutuellement alternés et sont au moins légèrement inclinés, au delà du plan contenant le bord inférieur de la paroi (6'), en direction de la partie supérieure fermée dudit capuchon (6).

4. Pendentif d'oreille selon l'une quelconque des revendications 1 et 2, **caractérisé en ce que** le capuchon (6) est réalisé en un matériau au moins légèrement déformable élastiquement, préférentiellement métallique, et/ou muni au niveau du bord inférieur (6") de la paroi périphérique (6') de portions de fentes longitudinales (9) espacées circonférentiellement, de manière à permettre une compression élastique de la partie inférieure ouverte dudit capuchon (6).

5. Pendentif d'oreille selon l'une quelconque des revendications 1 à 4, **caractérisé en ce que** le capuchon (6) est inséré de force dans le manchon (5) en matériau thermoplastique, immédiatement après formation de ce dernier, le cas échéant d'un seul tenant avec la plaquette (3) correspondante, ou après solidarisation de ce dernier avec ladite plaquette (3), préférentiellement alors que ledit matériau constitutif est encore dans un état au moins légèrement plastique.

6. Pendentif d'oreille selon l'une quelconque des revendications 1 à 5, **caractérisé en ce que** le capuchon (6) porte ou est relié à un dispositif électronique de marquage et/ou de signalisation, par exemple sous la forme d'un circuit intégré monolithique, pour former un ensemble émetteur dont le capuchon (6) constitue le support et/ou l'antenne.

7. Pendentif d'oreille selon l'une quelconque des revendications 1 à 6, **caractérisé en ce que** le côté arrière (10''') de la pointe du cône (10') du corps de pointe (10) présente une conformation complémentaire de celle de l'extrémité du pointeau (12) de la pince à sertir ou de l'outil servant à appliquer ledit pendentif.

8. Pendentif d'oreille selon la revendication 7, **caractérisé en ce que** la partie arrière cylindrique (10") présente une structure essentiellement creuse et reçoit l'extrémité distale (11") de la tige creuse (11) en forme de collerette, de manière à former un épaulement annulaire circonférentiel (2") sur la face arrière de la pointe (2') de l'élément mâle (2) dont une partie circonférentielle intérieure est formée par ladite collerette (11") et la partie circonférentielle complémentaire extérieure par le bord libre de ladite partie arrière cylindrique creuse (10").

9. Pendentif d'oreille selon l'une quelconque des revendications 1 à 8, **caractérisé en ce que** la liaison assurant l'ancrage de la tige creuse (11) dans le corps de pointe (10) est réalisée par des prolongements (14) de l'extrémité distale (11") de la tige creuse (11) prenant appui au niveau d'épaulements adaptés (15) ménagés dans le corps de pointe (10), lesdits prolongements (14) débouchant de manière affleurante au niveau de la surface extérieure du cône pointu (10'), en formant des motifs (16) ne présentant sensiblement aucune portion de contour parallèle avec l'arrête circonférentielle (17) séparant le cône pointu (10') et la partie arrière cylindrique (10") du corps de pointe (10) et situés à distance de la pointe dudit cône (10') et en dehors d'une zone annulaire circonférentielle (18) s'étendant à la base dudit cône pointu (10').

10. Pendentif d'oreille selon l'une quelconque des revendications 1 à 9, **caractérisé en ce que** le corps de pointe (10) et la tige creuse (11), ainsi qu'éventuellement la seconde plaquette (3), sont réalisées d'un seul tenant par injection simultanée de deux matériaux thermoplastiques différents, par surmoulage ou par assemblage d'un corps de pointe (10) métallique avec une tige creuse (11) et une plaquette 3 en matériau thermoplastique.

## Patentansprüche

1. Ohrmarke oder Ohrring zur Tiermarkierung, das von einem ersten Plättchen gebildet wird, das mit einem ein Ende in Spitzform aufweisenden Steckverbindungselement verbunden ist, und einem zweiten Plättchen, das mit einem aufnehmenden Steckverbindungselement verbunden ist, welches die besagte Spitze aufnehmen kann, wobei das aufnehmende Steckverbindungselement (4) einerseits eine Öffnung (4') zum Hindurchführen der Spitze (2') aufweist, die auf der Seite, welche der Seite, an der die Spitze (2') eingeführt wird, gegenüberliegt, durch eine Hülse oder einen Hülsenabschnitt (5) aus einem thermoplastischen Werkstoff verlängert wird, die/der an ihrem/seinem der Öffnung (4') gegenüberliegenden Ende geschlossen ist oder nicht, und andererseits eine Kappe oder Kapsel (6), die in diese Hülse oder den Hülsenabschnitt (5) passend eingesetzt wird und Elemente zur Verankerung (7) in die Wände der Hülse oder des Hülsenabschnitts und/oder in das zweite Plättchen (3) umfasst und Mittel zum Zurückhalten (8) der Spitze (2') des Steckelements (2), insbesondere auf Ebene eines hinteren Vorsprungs (2") dieser Spitze (2'), wobei die Ohrmarke **dadurch gekennzeichnet ist, dass** das Steckelement (2) eine Verbundstruktur hat, nämlich einen Spitzkörper (10), der einen spitzen Kegel (10') ausbildet, welcher durch ein hinteres zylindrisches Teil (10'') und einen mit seinem abgewandten Ende in diesem Spitzkörper (10) verankerten Hohlstift (11) verlängert wird und dessen längs verlaufender Hohlraum (11') in die Rückseite (10''') der Kegelspitze (10') im Spitzkörpers (10) mündet, dadurch, dass der Spitzkörper (10) aus einem harten und starren Kunststoff oder aus Metall und der Hohlstift (11) aus einem mindestens teilweise elastisch verformbaren und flexiblen, vorzugsweise geschmeidigem Kunststoff besteht und dadurch, dass die Verbindung zur Gewährleistung der Verankerung des Hohlstifts (11) im Spitzkörper (10) einen oder mehrere kalibrierte Trenn- oder Lösebereiche (13) aufweist, der/die durch den Spitzkörper (10) geschützt wird/werden und das Lösen des Hohlstifts (11) vom Spitzkörper (10) bewirkt/bewirken, wenn sie einer über einen bestimmten Schwellenwert hinausgehenden Trennkraft ausgesetzt werden.

2. Ohrmarke nach Anspruch 1, **dadurch gekennzeichnet, dass** die Kappe (6) eine Seitenwand (6') aufweist, deren Höhe nahezu der Höhe der Hülse oder des Hülsenabschnitts (5) entspricht, und eine Form hat, die einem zylindrisch oder kegelstumpfartig gekrümmten Würfel gleicht, gegebenenfalls mit einem Oberteil, das nahezu die Form der Spitze (2') annimmt, wobei die Verankerungsmittel (7) und die Rückhaltemittel (8) jeweils einerseits aus Verlängerungen unterhalb der Wand (6') in Form von Nasen, die sich nach außen erstrecken, und andererseits aus Verlängerungen unterhalb der Wand (6') in Form von Laschen, die sich nach innen erstrecken, bestehen.

3. Ohrmarke nach Anspruch 2, **dadurch gekennzeichnet, dass** die Nasen (7) und die Laschen (8) gleichmäßig um die Unterkante (6") der Seitenwand (6') verteilt sind, wobei sie sich jeweils abwechseln, und sich zumindest leicht über die die Unterkante der Wand (6') einschließende Ebene hinaus in Richtung des geschlossenen Oberteils dieser Kappe (6) neigen.

4. Ohrmarke nach einem der Ansprüche 1 und 2, **dadurch gekennzeichnet, dass** die Kappe (6) aus zumindest einem elastisch leicht verformbaren, vorzugsweise metallischen Werkstoff ausgeführt wird und/oder auf Ebene der Unterkante (6'') der Seitenwand (6') mit Längsschlitzabschnitten (9) versehen ist, die so auf dem Umfang beabstandet sind, dass das geöffnete Unterteil der besagten Kappe (6) elastisch zusammengedrückt werden kann.

5. Ohrmarke nach einem der Ansprüche 1 bis 4, **dadurch gekennzeichnet, dass** die Kappe (6) unmittelbar nach Ausbildung der Hülse (5) aus einem thermoplastischen Werkstoff in diese gedrückt wird, gegebenenfalls in einem Stück mit dem entsprechenden Plättchen (3), oder nach ihrer Verbindung mit dem Plättchen (3), vorzugsweise dann, wenn sich dieser Werkstoff noch in einem zumindest leicht plastischen Zustand befindet.

6. Ohrmarke nach einem der Ansprüche 1 bis 5, **dadurch gekennzeichnet, dass** die Kappe (6) eine elektronische Markierungs- oder Signalgebungsvorrichtung beispielsweise in Form eines integrierten Festkörperschaltkreises aufnimmt bzw. mit einer solchen Vorrichtung verbunden ist, um einen Senderbaugruppe auszubilden, dessen Kappe (6) den Träger und/oder die Antenne bildet.

7. Ohrmarke nach einem der Ansprüche 1 bis 6, **dadurch gekennzeichnet, dass** die Rückseite (10''') der Kegelspitze (10') des Spitzkörpers (10) eine das Ende der Nadel (12) des Crimpwerkzeugs oder des zur Anbringung der Ohrmarke verwendeten Werkzeugs ergänzende Ausbildung besitzt.

8. Ohrmarke nach Anspruch 7, **dadurch gekennzeichnet, dass** das hintere zylindrische Teil (10") eine im Wesentlichen hohle Struktur aufweist und das abgewandte, kragenförmige Ende (11'') des Hohlstifts (11) derart aufnimmt, dass ein umlaufender Ringsteg (2'') auf der Rückseite der Spitze (2') des Steckelements (2) ausgebildet wird, von dem ein umlaufendes Innenteil durch diesen Kragen (11'') und das zusätzliche umlaufende Außenteil durch den freien Rand des hinteren zylindrischen Hohlteils (10") ausgebildet wird.

9. Ohrmarke nach einem der Ansprüche 1 bis 8, **dadurch gekennzeichnet, dass** die Verbindung zur Gewährleistung der Verankerung des Hohlstifts (11) im Spitzkörper (10) von Verlängerungen (14) des abgewandten Endes (11'') des Hohlstifts (11) ausgebildet wird, die auf geeigneten Stegen (15) aufliegen, die in den Spitzkörper (10) eingearbeitet sind, wobei die besagten Verlängerungen (14) bündig auf Ebene der Außenfläche des spitzen Kegels (10') auslaufen, wobei sie Motive (16) ausbilden, die nahezu keinen parallelen Außenlinienabschnitt mit der den spitzen Kegel (10') und das hintere zylindrische Teil (10'') des Spitzkörpers (10) trennenden umlaufenden Kante (17) aufweisen und von der Spitze dieses Kegels (10') beabstandet sind und außerhalb eines umlaufenden Ringbereichs (18, der sich an der Basis des spitzen Kegels (10') erstreckt.

10. Ohrmarke nach einem der Ansprüche 1 bis 9, **dadurch gekennzeichnet, dass** der Spitzkörper (10) und der Hohlstift (11) sowie eventuell das zweite Plättchen (3) in einem Zug durch gleichzeitiges Einspritzen von zwei verschiedenen thermoplastischen Werkstoffen, durch Vergießen oder Verbindung eines metallischen Spitzkörpers (10) mit einem Hohlstift (11) und einem Plättchen (3) aus einem thermoplastischen Werkstoff in einem Stück gefertigt werden.

## Claims

1. Pendant or ear tag for marking animals, consisting of a first plaque associated with a male assembly element comprising a pointed end and of a second plaque associated with a female assembly element capable of receiving said point, the female element (4) comprising, on the one hand, an orifice (4') for the passage of the extended point (2'), on the side remote from the side on which the point (2') is introduced, from a sleeve or sleeve portion (5) made of a thermoplastic material, which may or may not be closed at its end remote from the orifice (4'), and, on the other hand, a cap or a capsule (6) attached in an adjusted manner in said sleeve or said sleeve portion (5) and comprising means (7) for anchoring in the walls of said sleeve or sleeve portion and/or in the second plaque (3), and means (8) for holding the point (2') of the male element (2), in particular in the region of a rear shoulder (2") of said point (2'), pendant **characterised in that** the male element (2) has a composite structure, i.e. a pointed body (10) forming a pointed cone (10) that is extended by a cylindrical rear portion (10") and a hollow rod (11) anchored in said pointed body (10) by its distal end, and of which the hollow longitudinal passage (11') opens into the rear side (10''') of the point of the cone (10') inside the pointed body (10), **in that** the pointed body (10) is made of a hard and rigid plastics material or of metal and the hollow rod (11) of an at least partially elastically deformable and flexible, preferably pliable, plastics material, and **in that** the connection anchoring the hollow rod (11) in the pointed body (10) comprises one or more zones (13) of calibrated braking or disengagement protected by said pointed body (10), causing the hollow rod (11) to become detached from the pointed body (10) when they are subjected to a separating force exceeding a predetermined threshold value.

2. Ear tag according to claim 1, **characterised in that** the cap (6) comprises a peripheral wall (6'), the height of which is substantially equal to that of the sleeve or the sleeve portion (5'), and has a shape similar to a cylindrical or truncated thimble, optionally with an upper portion substantially mating with the shape of the point (2'), the anchoring means (7) and the holding means (8) consisting, respectively, of lower extensions of the wall (6') in the form of outwardly extending lugs, on the one hand, and of lower extensions of the wall (6') in the form of inwardly extending tongues, on the other hand.

3. Ear tag according to claim 2, **characterised in that** the lugs (7) and the tongues (8) are distributed uniformly around the lower edge (6") of the peripheral wall (6') by being mutually alternated and are at least slightly inclined, beyond the plane containing the lower edge of the wall (6'), in the direction of the upper closed portion of said cap (6).

4. Ear tag according to any one of claims 1 and 2, **characterised in that** the cap (6) is made of an at least slightly elastically deformable, preferably metallic, material and/or provided in the region of the lower edge (6") of the peripheral wall (6') with longitudinal, circumferentially spaced slot portions (9), so as to allow resilient compression of the lower open portion of said cap (6).

5. Ear tag according to any one of claims 1 to 4, **characterised in that** the cap (6) is forcefully inserted into the sleeve (5) made of thermoplastic material, immediately after formation thereof, optionally in one piece with the corresponding plaque (3), or after said sleeve has been joined to said plaque (3), preferably while the constituent material is still in an at least slightly plastic state.

6. Ear tag according to any one of claims I to 5, **characterised in that** the cap (6) holds or is connected to an electronic marking and/or signalling device, for example in the form of a monolithic integrated circuit, in order to form an emitter assembly, the cap (6) of which forms the support and/or the antenna.

7. Ear tag according to any one of claims 1 to 6, **characterised in that** the rear side (10''') of the point of the cone (10') of the pointed body (10) has a configuration complementary to that of the end of the needle (12) of the crimping pliers or of the implement used to apply said pendant.

8. Ear tag according to claim 7, **characterised in that** the cylindrical rear portion (10") has a substantially hollow structure and receives the distal end (11") of the hollow rod (11) in the form of a flange, so as to form a circumferential annular shoulder (2") on the rear face of the point (2') of the male element (2), of which an inner circumferential portion is formed by said flange (11") and the outer complementary circumferential portion by the free edge of said hollow cylindrical rear portion (10").

9. Ear tag according to any one of claims 1 to 8, **characterised in that** the connection anchoring the hollow rod (11) in the pointed body (10) is produced by extensions (14) of the distal end (11") of the hollow rod (11) resting in the region of adapted shoulders (15) provided in the pointed body (10), said extensions (14) opening in a flush manner in the region of the outer surface of the pointed cone (10'), forming patterns (16) having substantially no contour portion parallel to the circumferential stop (17) separating the pointed cone (10') and the cylindrical rear portion (10") of the pointed body (10) and located remote from the point of said cone (10') and outside a circumferential annular zone (18) extending to the base of said pointed cone (10').

10. Ear tag according to any one of claims 1 to 9, **characterised in that** the pointed body (10) and the hollow rod (11), and optionally also the second plaque (3), are produced in one piece by simultaneously injecting two different thermoplastic materials, by over-moulding or by joining a metallic pointed body (10) to a hollow rod (11) and a plaque (3) made of thermoplastic material.
